Europäisches Patentamt

European Patent Office

Office européen des brevets

(11) Veröffentlichungsnummer: **0 527 402 A1**

# EUROPÄISCHE PATENTANMELDUNG

(21) Anmeldenummer: **92113085.2**

(22) Anmeldetag: **31.07.92**

(51) Int. Cl.5: **C03C 8/04**

(30) Priorität: **13.08.91 IT MI912254**

(43) Veröffentlichungstag der Anmeldung:
**17.02.93 Patentblatt 93/07**

(84) Benannte Vertragsstaaten:
**DE ES FR GB IT**

(71) Anmelder: **Bayer S.p.A.**
**Viale Certosa 126**
**I-20156 Milano(IT)**

(72) Erfinder: **Thometzek, Peter, Dr.**
**Via San Giovanni Evangelista**
**I-41040 Spezzano di Fiorano (MO)(IT)**
Erfinder: **Schlegel, Christian**
**Via Virgiolio 1**
**I-21040 Venegono Superiore(IT)**

(74) Vertreter: **Müller, Gerhard, Dr. et al**
**BAYER AG Konzernverwaltung RP**
**Patentabteilung**
**W-5090 Leverkusen 1 Bayerwerk (DE)**

(54) **Blei-, Cadmium- und Bariumfreie Fritten für keramische Glasuren.**

(57) Die Erfindung betrifft Fritten für keramische Glasuren die durch einen hohen CaO-Gehalt bei gleichzeitig geringen Gehalten an $B_2O_3$ und ZnO charakterisiert sind.

EP 0 527 402 A1

Gegenstand der vorliegenden Erfindung sind Fritten für keramische Glasuren die durch einen hohen CaO-Gehalt bei gleichzeitig geringen Gehalten an $B_2O_3$ und ZnO charakterisiert sind.

An die Qualität von Fritten für Glasuren auf keramischen Scherben werden aufgrund des hochentwickelten Standes der Technik hohe Anforderungen gestellt: Sie müssen zur Bildung einer glatten, hochglänzenden Oberfläche auf keramischen Scherben nach dem Glasurbrand geeignet sein, wobei sowohl der Traditionalbrand mit Einbrenntemperaturen von 12 bis 48 Stunden als auch der Schnellbrand mit Einbrennzeiten von 0,5 bis 6 Stunden in Frage kommt. Sie müssen ferner einen den jeweiligen Scherben angepaßten thermischen Ausdehnungskoeffizienten im Bereich von 20 bis 400°C zwischen 55 und 75 x $10^{-6}/°C$ aufweisen. Ferner wird das Erfordernis der hohen Resistenz gegenüber dem Angriff von Säuren und Laugen gestellt. Schließlich wird eine ausgezeichnete Verträglichkeit gegenüber Dekorfarben, besonders gegenüber Unterglasur-Dekorfarben, auch gegenüber kritischen Farbtönen wie z.B. pink oder schwarz, verlangt.

Es wurden bereits auch Blei- und Cadmium-freie Fritten zur Verfügung gestellt, da diese Elemente als Frittenbestandteile insbesondere bei keramischem Eßgeschirr zu gesundheitlichen Schädigungen führen können, wenn die Fritten insgesamt eine unzureichende Säure- und LaugenBeständigkeit aufweisen. Zum Beispiel kann es zum Herauslösen dieser Elemente kommen, wenn die Glasur verletzt ist. Solche Blei- und Cadmium-freien Fritten sind z.B. in den US-A 40 84 976, 42 82 035 und 43 40 645 offenbart. Die dort beschriebenen Fritten weisen jedoch jeweils gewisse Gehalte an Bariumoxid auf.

Barium gilt als Herzgift, so daß der Wunsch besteht, auch Bariumoxid-freie Fritten zur Verfügung zu stellen, um für alle Anwendungsbereiche eine Kontamination mit Barium ausschließen zu können,

Es wurde nun gefunden, daß es gelingt, auch Bariumoxidfreie Fritten zur Verfügung zu stellen, die die hohen Anforderungen heutiger Fritten für Keramikglasuren erfüllen, wenn der Calciumoxidgehalt bis auf nach dem Stand der Technik hohe Werte von 13 bis 16 Gew.-% erhöht wird und darüber hinaus bestimmte Mengenverhältnisse der übrigen Frittenbestandteile eingehalten werden.

Gegenstand der vorliegenden Erfindung sind Blei-, Cadmium- und Barium-freie Frittenzusammensetzungen für Keramikglasuren, die durch folgende Zusammensetzung gekennzeichnet sind:

| | |
|---|---|
| 54 bis 64 | Gew.-Teile $SiO_2$ |
| 3 bis 9 | Gew.-Teile $B_2O_3$ |
| 8 bis 13 | Gew.-Teile $Al_2O_3$ |
| 2,5 bis 6,0 | Gew.-Teile Alkalioxid |
| 0 bis 2 | Gew.-Teile MgO |
| 13 bis 16 | Gew.-Teile CaO |
| 0 bis 6 | Gew.-Teile SrO |
| 2 bis 6 | Gew.-Teile ZnO |
| 0 bis 2 | Gew.-Teile $TiO_2$ |
| 0 bis 2 | Gew.-Teile $Bi_2O_3$ |
| 0 bis 1 | Gew.-Teile $P_2O_5$ und |
| 0 bis 2 | Gew.-Teile $ZrO_2$. |

Die obengenannte Zusammensetzung der erfindungsgemäßen Glasurfritten soll mindestens 98 Gew.-% der Fritte insgesamt ausmachen. Vorzugsweise ergibt die Summe der obengenannten Bestandteile 100 Gew`-%, wobei lediglich unvermeidliche Verunreinigungen aus mineralischen Rohstoffen in einer Menge bis 0,5 Gew.-% vorhanden sein sollen.

Der Alkalioxidgehalt setzt sich zusammen aus maximal 1 Gew.-Teil $Li_2O$, maximal 3 Gew.-Teilen $Na_2O$ und 2 bis 5 Gew.-Teilen $K_2O$. In der Summe müssen aber mindestens 2,5 und maximal 6,0 Gew.-Teile Alkalioxid vorhanden sein. In besonders bevorzugten erfindungsgemäßen Fritten beträgt der Gehalt an Kaliumoxid mindestens das Doppelte des Gehaltes an Natriumoxid und Lithiumoxid zusammen.

Überraschenderweise kann in den erfindungsgemäßen Fritten mit einem relativ hohen CaO-Gehalt von 13 bis 16 Gew.-% bei gleichzeitig geringen Mengen an $B_2O_3$ und ZnO gearbeitet werden, wobei ein hoher Glanz, eine hohe Säure- und Laugenresistenz sowie eine ausgezeichnete Dekorfarbenverträglichkeit, besonders gegen Unterglasurdekore erreicht wird. Bei CaO-Gehalten unter 13 Gew.-% werden Dekorfarben angegriffen, bei Gehalten über 16 Gew.-% beobachtet man Glanzverlust bzw. Mattierung der Glasur durch Kristallausscheidungen.

Der $B_2O_3$-Gehalt der erfindungsgemäßen Fritten beträgt 3 bis 9 Gew.-%. Ist er geringer, weisen die Fritten einen zu niedrigen Glanz sowie einen zu hohen Ausdehnungskoeffizienten auf. Ist der $B_2O_3$-Gehalt höher, werden empfindliche Unterdekor-Glasurfarben verändert.

EP 0 527 402 A1

Der ZnO-Gehalt muß zwischen 2 und 6 Gew.-% liegen. Ist er niedriger, liefern die Fritten wiederum einen zu niedrigen Glanz. Bei höheren Gehalten findet ein Angriff auf Dekorfarben statt. Ferner verlieren die Glasurschlicker schnell ihre Stabilität, was ihre Recyclierung in der Produktion verhindert.

Ein $Al_2O_3$-Anteil von 8 bis 13 Gew.-% ist für die Alkalibeständigkeit der erfindungsgemäßen Fritten entscheidend. Höhere $Al_2O_3$-Gehalte führen zu Glanzverlust. Durch $ZrO_2$- und/oder $TiO_2$-Gehalte von bis zu 2 Gew.-% kann die Alkalibeständigkeit zusätzlich verbessert werden. Höhere Mengen an $ZrO_2$ und/oder $TiO_2$ verursachen Glanzverlust bzw. Trübung.

Der Gesamtalkaligehalt muß zwischen 2,5 und 6 Gew`-% liegen, um einerseits eine genügende Schmelzbarkeit der Fritte zu gewährleisten, um andererseits den thermischen Ausdehnungskoeffizienten nicht zu stark zu erhöhen. Der $Na_2O$-Gehalt liegt vorzugsweise zwischen 0,2 und 1,5 Gew.-%, der $K_2O$-Gehalt im Bereich von 3,0 bis 4,5 Gew.-% bei Abwesenheit von $Li_2O$. Glasurfritten mit diesen bevorzugten Alkaligehalten sind besonders für den keramischen Schnellbrand, sogar für Monoporosa-Scherben geeignet, da sich diese Fritten durch einen hohen Erweichungspunkt auszeichnen, der die Entgasung des Scherbens vor dem Glattfliesen der Glasur ermöglicht.

Der MgO-Gehalt beträgt 0 bis 2 Gew.-%, bevorzugt 0,7 bis 1,6 Gew.-%. Gehalte über 2 Gew.-% verursachen Glanzverlust.

Die SrO-Menge kann ohne Nachteil für die erhältlichen Glasuren bis zu 6 Gew.-% betragen. In bevorzugten Fritten wird jedoch auf SrO völlig verzichtet, da dieses das Auskleidungsmaterial der Schmelzöfen angreifen und dort zu Beschädigungen führen kann.

Ein $Bi_2O_3$-Gehalt von 0 bis 2 Gew.-% erhöht die Brillianz der Glasuren. Fritten mit Gehalten von mehr als 2 Gew.-% $Bi_2O_3$ verursachen dagegen einen unerwünschten Gelbstich.

Ein geringer $P_2O_5$-Gehalt führt im allgemeinen zu einer Verbesserung der Oberfläche der Glasur.

Ein weitere ökologischer und ökonomischer Vorteil der erfindungsgemäßen Fritten liegt in der Abwesenheit des Elementes Fluor. Bei fluorhaltigen Glasuren kann dieses Element während des Glattbrandes entweichen, was aufwendige Abgas-Reinigungsanlagen für die Einbrennöfen notwendig macht.

Die erfindungsgemäßen Fritten werden in üblicher Weise aus üblichen mineralischen Rohstoffen geschmolzen, gefrittet und vermahlen. Der Auftrag auf den Scherben erfolgt in Form eines Glasurschlickers, der mindestens 55 Gew.-% (Trockenmasse) an erfindungsgemäßer Fritte und darüber hinaus übliche Schlickerbestandteile wie z.B. Kaolin, Bentonit, China Clay, Quarz, Alumiumoxid, Molochit, Feldspat, Talk, Pigmente und/oder Trübungsmittel enthält, Vorzugsweise enthält der Schlicker mindestens 85 Gew.-% (Trockensubstanz) erfindungsgemäßer Fritte, um eventuell störende Einflüsse zu hoher anderer Schlickerbestandteile zu vermeiden.

Die erfindungsgemäßen Fritten sind für die Glasur von keramischen Geschirrmassen wie z.B. Vitreous-China, Semi-Vitreous-China, Bone-China, Hartsteingut und Weichporzellan hervorragend geeignet. Aufgrund ihrer hohen Alkali- und Säurebeständigkeit sind sie insbesondere für Hotelporzellan geeignet. Weitere Anwendungsgebiete sind der Überzug keramischer Fließen.

Die Fritten können auf den keramischen Scherben sowohl als Schlicker im Tauch oder Spritzverfahren, als auch als trockenes Pulver aufgepudert werden. Nach entsprechender Vorbehandlung sind die Fritten ferner für den elektrostatischen Pulverauftrag geeignet. Ferner sind Fritten mit den erfindungsgemäß besonders bevorzugten Alkaligehalten sowohl für das Schnellbrandverfahren mit Brandzeiten zwischen 30 und 6 Stunden als auch für die Verarbeitung im Monoporosa-Verfahren geeignet.

Die Erfindung wird anhand der nachfolgenden Beispiele näher erläutert, wobei die folgenden Prüfungen durchgeführt werden:

Die Resistenz gegen Laugen, d.h. Detergenzien die in Spülmaschinen eingesetzt werden, wird mit Hilfe einer 0,3 %igen wäßrigen Lösung der Substanz Super-Soilax, erhältlich von der Firma Economics Laboratories, Sant Paul, Minnesota, USA bei einer Temperatur von 96°C über 2 x 24 Stunden wie in US-A 42 82 035 beschrieben, geprüft. Der Gewichtsverlust der nachfolgend beschriebenen Glasuren lag bei dieser Prüfung jeweils unter 0,05 Gew.-%; es traten weder Oberflächenfehler noch Glanzverluste auf.

Die Säurebeständigkeit wird gegenüber 4 %iger Essigsäure bei einer Einwirkzeit von 24 Stunden bei Raumtemperatur getestet. Es trat jeweils keine Veränderung der Glasuroberfläche auf.

Die Verträglichkeit gegenüber Unterglasur-Farben wird gegen einen besonders empfindlichen Cr-Sn-pink-Farbkörper, der von der Bayer AG, 5090 Leverkusen, BRD, erhältlich ist, geprüft. Weiterhin wurden Prüfungen gegen die Farben rosa, blau, grün, braun und schwarz beurteilt. Die aus den erfindungsgemäßen Fritten hergestellten Glasuren waren mit den Farben ausgezeichnet verträglich, so daß nach dem Glasurbrand auch mit dem Mikroskop keine Farbveränderungen feststellbar waren.

Die nachfolgenden Beispiele wurden aus üblichen Rohstoffen bei 1500°C während 30 Minuten geschmolzen, in kaltem Wasser abgeschreckt und getrocknet.

Die Zusammensetzung der Fritten gemäß Beispielen 1 bis 5 ist in Tabelle 1 wiedergegeben.

3

Die Untersuchung des thermischen Ausdehnungskoeffizienten zwischen 20 und 400°C mit Hilfe des Dilatometers ergab einen Wert von 67 x ± 8 x $10^{-7}$/°C.

Beispiele 1 bis 3

In einer Kugelmühle werden jeweils 94 Gew.-Teile Fritte gemäß Tabelle 1, 6 Gew.-Teile Kaolin und 60 Gew.-Teile Wasser 2 Stunden zu einem keramischen Schlicker vermahlen. Nach Tauchauftrag auf einen keramischen Vitreous-China-Scherben, Trocknung und Brand bei 1150°C während 6 Stunden erhält man eine hochglänzende, transparente Glasur mit ausgezeichneter Säure- und Laugenbeständigkeit sowie ausgezeichneter Dekorfarbenverträglichkeit.

Beispiel 4

In einer Kugelmühle werden 90 Gew.Teile Fritte, Nr.4, 5 Gew.Teile Kaolin sowie 5 Gew.Teile gebrannter Kaolin und 60 Gew.Teile Wasser zu einem keramischen Schlicker vermahlen. Nach Spritzauftrag auf einen keramischen Hartsteingut-Scherben, Trocknung und Schnellbrand bei 1230°C in 80 Minuten erhält man eine hochglänzende, transparente Glasur mit ausgezeichneter Säure- und Laugenbeständigkeit.

Beispiel 5

In einer Kugelmühle werden 96 Anteile der Fritte Nr. 5, 4 Gew.-Teile Kaolin, 0,4 Gew.-Teile Natriumcarboxymethylcellulose und 50 Gew.-Teile Wasser zu einem keramischen Schlicker vermahlen. Nach Spritzauftrag auf einen ungebrannten keramischen Monoporosa-Scherben, Trocknung und Schnellbrand bei 1070°C über 50 Minuten erhält man eine hochglänzende, transparente Glasur mit fehlerfreier Oberfläche.

Beispiel 6

Die Fritte Nr. 5 wird gemäß DE-A 2 015 072 zu einem fließfähigen Pulver verarbeitet und mit einer Puesta-Pistole elektrostatisch auf einen keramischen Monoporosa-Scherben aufgetragen. Der Brand erfolgt gemäß Beispiel 5. Man erhält eine hochglänzende, transparente Glasur mit fehlerfreier Oberfläche.

Tabelle 1

| Fritte Nr. | 1 | 2 | 3 | 4 | 5 |
|---|---|---|---|---|---|
| $SiO_2$ | 58 | 56,8 | 60 | 58 | 57 |
| $B_2O_3$ | 3 | 8 | 3 | 4 | 7,5 |
| $Al_2O_3$ | 11 | 10 | 12 | 11 | 9,5 |
| $LiO_2$ | – | – | 0,5 | – | – |
| $Na_2O$ | 1,5 | 1,5 | 1,5 | 0,5 | 0,5 |
| $K_2O$ | 4 | 3,5 | 4 | 4 | 4 |
| $MgO$ | 1,5 | 1,5 | 1,5 | 1,5 | 1,5 |
| $CaO$ | 15 | 15 | 15 | 15 | 15 |
| $SrO$ | – | – | – | – | – |
| $ZnO$ | 5,5 | 2 | 2 | 5,5 | 4 |
| $ZrO_2$ | 0,25 | 1 | 0,25 | 0,25 | 0,25 |
| $TiO_2$ | – | – | – | – | 0,5 |
| $Bi_2O_3$ | – | 0,5 | – | – | – |
| $P_2O_5$ | 0,25 | 0,2 | 0,25 | 0,25 | 0,25 |

**Patentansprüche**

1. Blei-, Cadmium- und Barium-freie Frittenzusammensetzung für Keramikglasuren, bestehend zu mindestens 98 Gew.-% aus

| 54 bis 64 | Gew.-Teile $SiO_2$ |
|---|---|
| 3 bis 9 | Gew.-Teile $B_2O_3$ |
| 8 bis 13 | Gew.-Teile $Al_2O_3$ |
| 2,5 bis 6,0 | Gew.-Teile Alkalioxid |
| 0 bis 2 | Gew.-Teile MgO |
| 13 bis 16 | Gew.-Teile CaO |
| 0 bis 6 | Gew.-Teile SrO |
| 2 bis 6 | Gew.-Teile ZnO |
| 0 bis 2 | Gew.-Teile $TiO_2$ |
| 0 bis 2 | Gew.-Teile $Bi_2O_3$ |
| 0 bis 1 | Gew.-Teile $P_2O_5$ |
| 0 bis 2 | Gew.-Teile $ZrO_2$. |

**Patentanspruch für folgenden Vertragsstaat : ES**

1. Verfahren zur Herstellung von Blei-, Cadmium- und Barium-freien Frittezusammensetzungen für Keramikglasuren, dadurch gekennzeichnet, daß die Fritten mindestens 98 Gew.-% aus

| 54 bis 64 | Gew.-Teile $SiO_2$ |
|---|---|
| 3 bis 9 | Gew.-Teile $B_2O_3$ |
| 8 bis 13 | Gew.-Teile $Al_2O_3$ |
| 2,5 bis 6,0 | Gew.-Teile Alkalioxid |
| 0 bis 2 | Gew.-Teile MgO |
| 13 bis 16 | Gew.-Teile CaO |
| 0 bis 6 | Gew.-Teile SrO |
| 2 bis 6 | Gew.-Teile ZnO |
| 0 bis 2 | Gew.-Teile $TiO_2$ |
| 0 bis 2 | Gew.-Teile $Bi_2O_3$ |
| 0 bis 1 | Gew.-Teile $P_2O_5$ und |
| 0 bis 2 | Gew.-Teile $ZrO_2$ |

bestehen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DD-A-157 327 (VEB FLIESENWERKE "KURT BUERGER") 3. November 1982 * Ansprüche * --- | 1 | C03C8/04 |
| A | GB-A-2 090 242 (CENTRAL GLASS COMPANY) * das ganze Dokument * --- | 1 | |
| A | EP-A-0 267 154 (CIBA-GEIGY AG.) * Zusammenfassung * --- | 1 | |
| A | CHEMICAL ABSTRACTS, vol. 89, no. 4, 24. Juli 1978, Columbus, Ohio, US; abstract no. 29553f, Seite 322 ; * Zusammenfassung * & JP-A-53 005 215 (TOKYO SHIBAURA ELECTRIC CO.) 18. Januar 1978 ----- | 1 | |

**RECHERCHIERTE SACHGEBIETE (Int. Cl.5 )**

C03C

Der vorliegende Recherchenbericht wurde für alle Patentansprüche erstellt

| Recherchenort | Abschlußdatum der Recherche | Prüfer |
|---|---|---|
| DEN HAAG | 11 NOVEMBER 1992 | VAN BOMMEL L. |